# EUROPEAN PATENT APPLICATION

(11) **EP 0 804 004 A1**
(43) Date of publication of application: **29.10.1997**
(21) Application number: 96201104.5
(22) Date of filing: 25.04.1996
(51) Int. Cl.: H04L 12/00, H04L 12/403

(54) **Method and arrangement for controlling log-in admittance of a network terminal**

(71) Applicant: ALCATEL BELL Naamloze Vennootschap, B-2018 Antwerpen 1 (BE)
(72) Inventor: Sierens, Christiaan Hendrik Jozef, 2640 Mortsel (BE); Vandenabeele, Peter Michel Noel, 2500 Lier (BE)

(57) **Abstract**

To admit network terminals (NT1, NT2, NT3, NT4) which are coupled to a central station (CS) in a multipoint-to-point network to log-in or to become operational, network terminal identifiers (TI_a, ..., TI_h) are partitioned in groups (G1, G2). One (G1) of the groups (G1, G2) is selected and only network terminals (NT3) having a network terminal identifier (TI_b) which forms part of the selected group (G1) are admitted to transmit a terminal identification message (TIM_NT3) towards the central station (CS) to attempt to become operational. The method is very efficient in case a large amount of network terminals attempt to log-in simultaneously. This happens for instance at initialisation of the network or after a network crash.

## Description

The present invention relates to a method for controlling log-in admittance of a network terminal in a multipoint-to-point network as described in the preamble of claim 1, a log-in arrangement to be used in a central station as described in the preamble of claim 19, and a log-in arrangement to be used in a network terminal as described in the preamble of claim 26.

Such a method and arrangements to perform such a method are already known in the art, e.g. from the international application published under the Patent Cooperation Treaty (PCT) with international publication number WO 91/16775. This application from applicant Telxon Corporation is entitled 'Communication System with Adaptive Media Access Control', and describes a communication system wherein so called controllers, controlling distinct areas of data terminals, grant transmission time to the data terminals in turn by polling, provided that these data terminals are already logged-in or operational. Before a data terminal is listed as being operational, it must first log-in with the controller of the area where it belongs to. The method for controlling log-in admittance known from the cited application is described more particularly in the section from page 18, line 14 to page 19, line 11 thereof. Summarising this section, the controller sends a log-in enable message, named a log-in polling signal, whereto all data terminals can respond with a so called log-in data message, which is a terminal identification message including, as is indicated on page 19, lines 8-10, a terminal identification number. Thus, upon receipt of the log-in polling signal, each data terminal is admitted to log-in. If however a large amount of terminals attempt to log-in simultaneously, for instance at initialisation of the network or after a network crash, the log-in data messages originating from different data terminals are contending and the controller or central station where all log-in data messages are sent to, will not be able to interpret the information in these messages. As a result, none of the terminals will become operational.

An object of the present invention is to provide a method and arrangements of the above known type, but which work efficiently also when a large number of network terminals attempt to log-in.

According to the invention, this object is achieved by the method for controlling log-in admittance of a network terminal as described in claim 1, the log-in arrangement to be used in a central station as described in claim 19, and the log-in arrangement to be used in a network terminal as described in claim 26.

In this way, by partitioning network terminal identifiers, and by allowing only network terminals having a unique terminal identifier which belongs to a selected one of the groups of the partition to log-in, contention of terminal identification messages is avoided, provided that the selected one of the groups contains only one network terminal that requests to log-in.

It is to be remarked here that, to avoid contention of terminal identification messages during a log-in procedure, a well known technique, called straight polled log-in, can be applied. In a straight polled log-in procedure however, only one network terminal at a time gets the probability to log-in. In such a method, the central station transmits a log-in enable message including one single network terminal identifier indicating which terminal is admitted to log-in. Such a method is very time-consuming and since most of the time the assigned network terminal will not be present and hence no terminal identification message will be transmitted in response to a log-in enable message, the straight polled log-in method inefficiently makes use of the network capacity.

An additional feature of the present method is that in a log-in trial, the groups of the partition may be polled, as described by claim 2.

In this way, all network terminals get the possibility to log-in since all of them form part of one group of the partition. At initialisation of the network for instance, it is recommended to poll through all groups so that all network terminals that attempt to become operational get the chance thereto. Later on, the number of groups that is polled may be reduced to those groups that include terminals which frequently log-in and log-out. Terminals whose terminal identifier is not included in any of these groups, may be admitted to log-in in a time window reserved therefore. Moreover, in particular implementations, some groups of the partition may be admitted to log-in more frequently than others. Hence, in a log-in trial, not necessarily all groups of the partition are polled.

Also a feature of the present method is that the log-in enable message may include a trial-identification field as described in claim 3.

In this way, each network terminal receiving the log-in enable message, is enabled to determine the log-in trial where the log-in enable message belongs to. As will be seen later on, this log-in trial identification is associated with a number of network terminals which subscribed to the log-in trial.

Another feature of the present method is that the central station chooses the selected one of the groups and thereupon generates a group identification message to be transmitted to the network terminals, as described in claim 4.

Hence, both the central station and the network terminals are aware of the selected one of the groups. It should however be remarked that in alternative implementations of the present invention, a unit operating independent from the central station and network terminals could partition the network terminal identifiers and select one of the groups out of the partition. Even so, the partitioning the network terminal identifiers in groups and selecting one group could be done autonomously in the central station and in each one of the network terminals if this partition and selection are based on predetermined rules known by the central station and by the network terminals. In the latter implementation, the necessity to inform each other via group identification messages disappears.

Yet another feature of the present method is that the group identification message may include a terminal range field as described by claim 5.

Thus, a group of network terminal identifiers may be defined by a lower and higher terminal identifier. All network terminals having a unique terminal identifier between the lower and higher terminal identifier fall within the defined range and consequently form part of the group.

Still an additional feature of the present method is that the group identification message may include a trial identification field, as described in claim 6.

In this way, it is clear to the network terminal to which log-in trial the group identification message belongs.

A further feature of the present invention is that a network terminal which is admitted to log-in, transmits a terminal identification message to the central station, as described by claim 7.

Via this terminal identification message, which is a message similar to the log-in data message of the method known from the above cited international publication, a network terminal that is admitted to log-in communicates its identity to the central station.

Also a further feature of the present method is that the group identification message may include parameter values for transmission of the terminal identification message by a network terminal, as described in claim 8.

Thus, the network terminal may for instance be told by the group identification message at what power level and at what time the terminal identification message of that log-in trial should be transmitted. The time parameter may for instance be a relative value indicating the delay between receipt of the log-in enable message and transmission of the terminal identification message by the network terminal.

Yet a further feature of the present method is that the log-in enable message may contain time information as described by claim 9.

In this way, the transmission of the terminal identification message by the network terminal may be timed in accordance with the time information contained by the log-in enable message. This time information may be included in a dedicated field of the log-in enable message or may be deduced by the network terminal from the time of arrival of this log-in enable message. In the latter case, the log-in enable message and terminal identification message are synchronised.

Another feature of the present method is that the transmit power used by a network terminal to transmit terminal identification messages may be increased stepwise. This is indicated by claim 10.

Thus, if the central station receives a terminal identification message at a power level below detection level, all network terminals which form part of the selected one of the groups and which attempt to become operational may simultaneously increase their transmit power to re-transmit their terminal identification messages. Compared to the already mentioned straight polled log-in method, wherein the transmit power of each network terminal is stepwise increased in separate power-increase phases, the present method is favourable since it is less time-consuming. This will be illustrated by a comparison of the present method and the straight polled log-in method later on in the description.

Also a feature of the present method is that the timing used by a network terminal to transmit terminal identification messages may be adapted as described by claim 11.

Thus, if the central station can not interpret a terminal identification message due to a wrong timing, the terminal identification message is re-transmitted by the network terminal with modified timing. Accurate timing of the messages is important especially in high bitrate systems wherein the density of upstream bursts is high.

Yet another feature of the invention is that groups which contain more than one network terminal that wants to become operational, may become re-partitioned, as described in claim 12.

This re-partitioning may be repeated until all groups contain at most one terminal identifier whose corresponding network terminal attempts to log-in.

Still a further feature of the present invention is that the central station may generate and transmit confirmation messages as described by claim 13.

In this way, a network terminal can be told that it is logged-in successfully.

Still another feature of the present method is that the central station, upon receipt of the terminal identification message, may perform a final check, as described by claim 14.

In this way, the central station detects fraudulent working network terminals which always pretend to form part of the selected one of the groups whatever this selected group may be. Such terminals can not become operational because the central station does not reply with a confirmation message and later on grants no transmit time to these terminals.

Furthermore, a feature of the present method is that, in a particular implementation thereof, the confirmation message may identify a new partition, as described in claim 15.

Hence, by the confirmation message, a network terminal may be told that its terminal identification message was not recognised by the central station since it was corrupted by terminal identification messages coming from other network terminals which belong to the same group. This group of terminal identifiers therefore is re-partitioned in new, smaller groups which each hopefully contain at most one identifier whose corresponding network terminal attempts to log-in. The group identifiers of these new groups and their contents may be communicated to all network terminals via the confirmation message or, as described in claim 5, by the group identification message.

Still a further feature of the present method is that the confirmation message may include a group identification field, as indicated by claim 16.

Thus, a network terminal receiving the confirmation message, can deduce therefrom the selected group of the partition.

Yet a further feature of the present invention is that the confirmation message may include a trial identification field, as described in claim 17.

Thus, a network terminal receiving the confirmation message, can deduce therefrom the log-in trial. It is remarked that the group identification field of claim 16 and the trial identification field of claim 17 may contain redundant information, as will be seen later.

Moreover, a feature of the present method is that the confirmation message may include a terminal identification field and/or new terminal identification field, as described in claim 18.

Hence, the network terminal, after having logged in, may be given a new terminal identifier assigned thereto by the confirmation message. This new terminal identifier may be shorter in length.

The above mentioned and other objects and features of the invention will become more apparent and the invention itself will be best understood by referring to the following description of an embodiment taken in conjunction with the accompanying drawings wherein:
Fig. 1 represents a multipoint-to-point network wherein an implementation of the method according to the present invention is applied;
Fig. 2 is a time diagram illustrating the flow of messages between a central station and a network terminal in an implementation of the present method;
Fig. 3 represents a group identification message, transmitted from the central station to the network terminals in an implementation of the present method;
Fig. 4 represents a log-in enable message, transmitted from the central station to the network terminals in an implementation of the present method;
Fig. 5 represents a terminal identification message, transmitted from one of the network terminals to the central station in an implementation of the present method;
Fig. 6 represents a confirmation message, transmitted from the central station to one of the network terminals in an implementation of the present method;
Fig. 7 is a time diagram illustrating the working of an implementation of the present method;
Fig. 8 is a time diagram illustrating the working of a straight polled log-in method;
Fig. 9 represents a block scheme of an embodiment of a log-in arrangement to he used in a central station, according to the present invention; and
Fig. 10 represents a block scheme of an embodiment of a log-in arrangement to be used in a network terminal, according to the present invention.

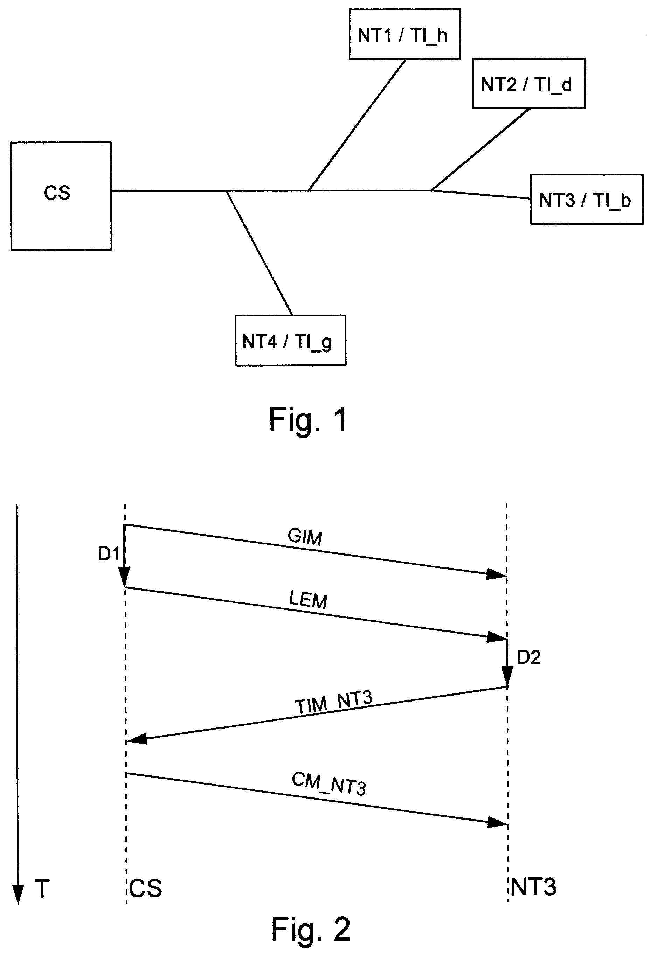

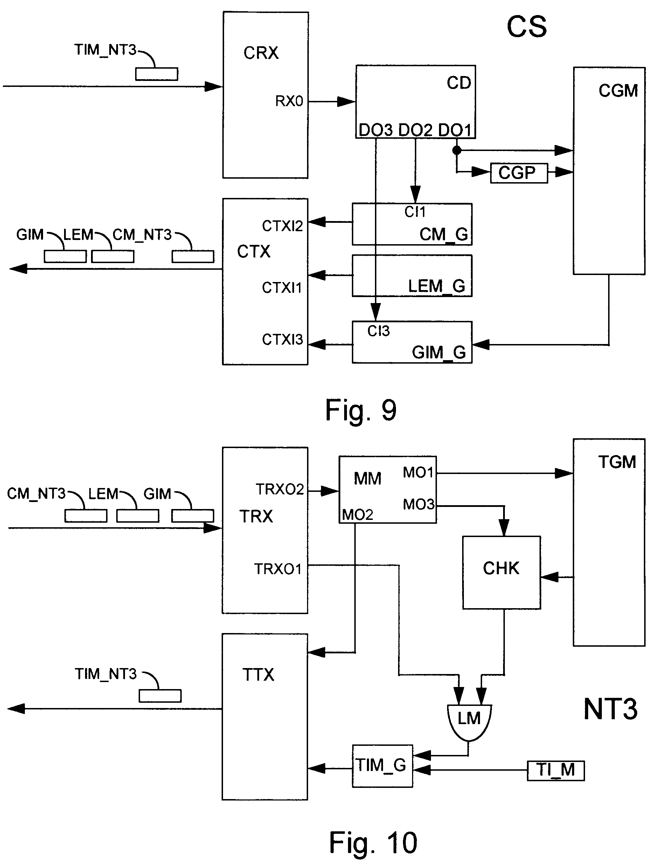

In the multipoint-to-point network drawn in Fig. 1, four network terminals, NT1, NT2, NT3 and NT4 are coupled to a central station CS via respective individual links and a shared link. The network terminals NT1, NT2, NT3 and NT4 each have a unique terminal identifier, TI_h, TI_d, TI_b and TI_g respectively, which is assigned thereto by the manufacturer. This unique terminal identifier is a world-wide unique code. In the downstream direction, i.e. in the direction from the central station CS to the network terminals NT1, NT2, NT3 and NT4, the central station CS broadcasts information which is received by all terminals. In the opposite direction, i.e. the upstream direction from the network terminals NT1, NT2, NT3 and NT4 towards the central station CS, data are transmitted in bursts. On the shared link, these bursts are multiplexed in timeslots assigned to the network terminals. Efficient use of the available upstream bandwidth on the shared link is obtained by assigning timeslots only to those network terminals that are operational. Thus, a network terminal NT3 is allowed to send data when it is listed as being operational by the central station CS. If the network terminal NT3 is not operational, he can become operational by passing through a so called log-in procedure. The following paragraphs will be focused on the log-in procedure for network terminals in the multipoint-to-point network of Fig. 1. An overview of the subsequent actions to be taken by either the central station CS or the network terminal NT3 that attempts to log-in is given in Fig. 2. First however, referring to Fig. 9 and Fig. 10, log-in arrangements that form part of the central station CS and network terminal NT3 will be described. In this way, reference can be made to the different functional blocks in Fig. 9 and Fig. 10 later on when describing the steps of the log-in procedure performed thereby.

The log-in arrangement of the central station CS comprises a receiver CRX, a transmitter CTX, a contention detector CD, a log-in enable message generator LEM_G, a confirmation message generator CM_G, a group identification message generator GIM_G, a group memory CGM and group pointer CGP.

A receiver input and transmitter output are coupled to the shared transmission line which is represented by two separate lines in Fig. 9, although it may be constituted by one single physical line such as a coaxial cable or an optical fibre link, or even by a radio link. An output RXO of the receiver CRX is coupled to an input of the contention detector CD. Detector outputs DO2 and DO3 are connected to control inputs CI1 and CI2 of the confirmation message generator CM_G and the group identification message generator (GIM_G) respectively. Detector output DO1 further is coupled to an input of the group memory CGM and an input of the group pointer CGP. This group pointer CGP and the group memory CGM are also interconnected and an output of the latter one is coupled to an input of the group identification message generator GIM_G. Outputs of the log-in enable message generator LEM_G, the confirmation message generator CM_G and the group identification message generator GIM_G are connected to a first CTXI1, a second CTXI2 and a third input CTXI3 of the transmitter CTX respectively.

The log-in arrangement of network terminal NT3, drawn in Fig. 10 also includes a receiver TRX, a transmitter TTX, and a group memory TGM. In addition, the arrangement comprises a message monitor MM, an identifier memory TI_M, checking means CHK, a logical and gate LM and a terminal identification message generator TIM_G.

An input of the receiver TRX and an output of the transmitter TTX are coupled to the individual transmission link of the multipoint-to-point network that is connected to terminal NT3 in Fig. 1. Again, this transmission link is represented by two separate lines in Fig. 10, whilst it may be constituted by one single physical line, e.g. a coaxial cable or an optical fibre link, or by a radio link. A first TRXO1 and a second TRXO2 output of the receiver TRX are coupled to inputs of the logical and gate LM and the message monitor MM respectively. A first monitor output MO1 is connected to an input of the group memory TGM, which further has an output coupled to an input of the checking means CHK, and a second monitor output MO2 is connected to a power control input of the transmitter TTX. The terminal identifier memory TI_M is provided with an output coupled to an input of the terminal identification generator TIM_G. Monitor output MO3 is coupled to a second input of the checking means CHK. An output of the checking means CHK is coupled to a second input of the logical and gate LM, whose output serves as a control input for the terminal identification message generator TIM_G. An output of this terminal identification message generator TIM_G is coupled to an input of the transmitter TTX.

It is noticed here that the components of the log-in arrangements of the central station CS and the network terminal NT3 are represented by functional blocks in Fig. 9 and Fig. 10. From the working of these components, which will be described very detailed in the following paragraphs, it will be clear for a person skilled in the art how each of the functional blocks can be implemented and manufactured.

Furthermore, it is remarked that each of the terminals NT1, NT2, NT3 and NT4 in Fig. 1 for evident reasons is equipped with a log-in arrangement similar to the log-in arrangement of network terminal NT3, drawn in Fig. 10.

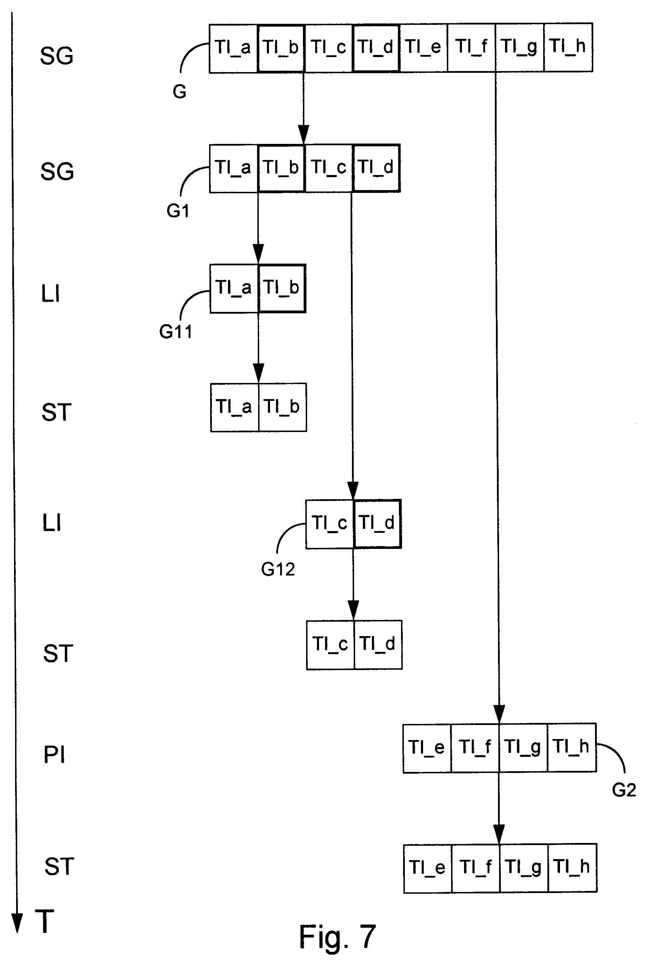

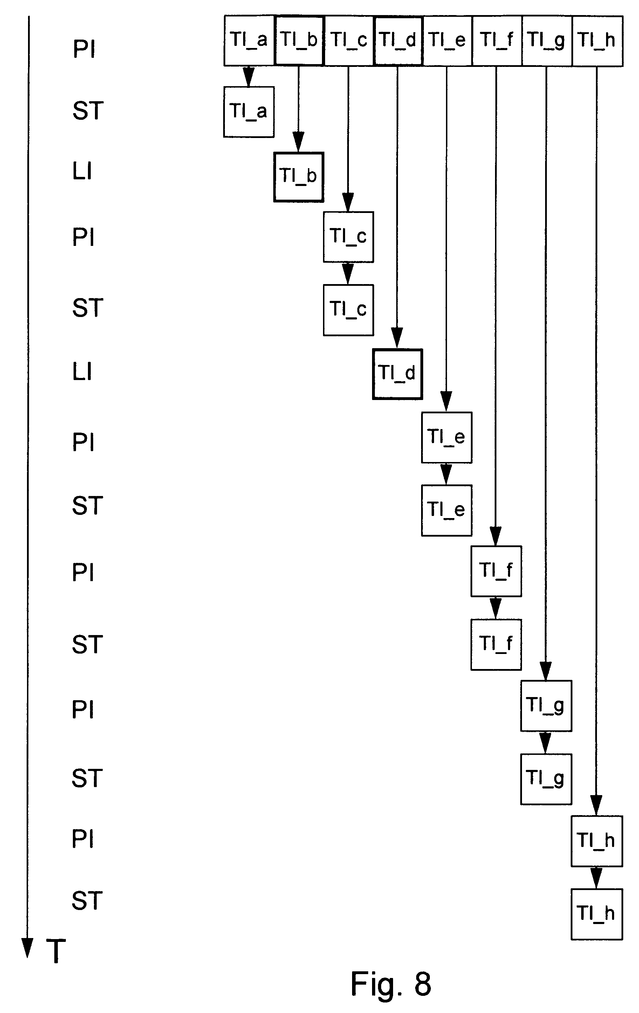

In the few next paragraphs, the log-in procedure allowing network terminal NT3 to become operational is described. The communication protocol via messages and the messages themselves are illustrated in Fig. 2, Fig. 3, Fig. 4, Fig. 5, and Fig. 6. Later on, a situation will be considered wherein network terminals NT1 and NT4 are already operational, whilst network terminals NT2 and NT3 simultaneously attempt to log-in. The subsequent steps as a function of time, allowing network terminals NT2 and NT3 to log-in in this particular situation are shown in Fig. 7. The performance of the method according to the present invention finally will be illustrated by comparing the time diagram of Fig. 7 and that of Fig. 8 which illustrates, still for the same situation, the subsequent steps to be taken by the well known straight polled log-in procedure.

Fig. 2 illustrates the successive steps in one phase of a log-in trial of network terminal NT3. Such a phase consists of the sending of four messages. In downstream direction, the central station CS broadcasts a group identification message GIM, followed by a log-in enable message LEM a time period D1 later. Both these messages are received by all network terminals in the network, i.e. by NT1, NT2, NT3 and NT4 in Fig. 1. A time period D2 after receipt of the log-in enable message LEM, network terminal NT3 sends a terminal identification message TIM_NT3 in upstream direction. This terminal identification message TIM_NT3 is processed by the central station CS, whereupon the central station sends the fourth and last message of the phase which is a confirmation message CM_NT3.

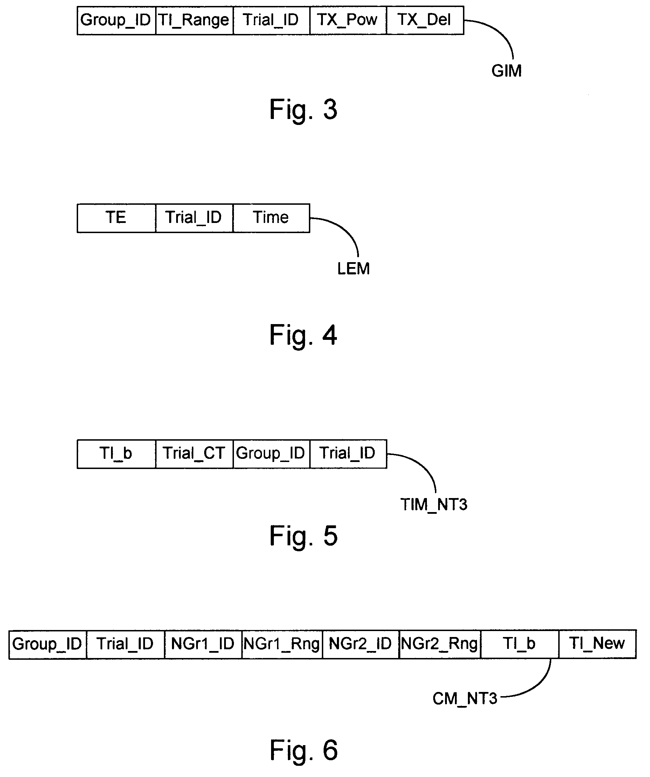

The first message, the group identification message GIM is an asynchronous message, for instance an ATM (Asynchronous Transfer Mode) cell in an ATM network, which contains a signature of the log-in trial and of a group of terminal identifiers. Network terminals in the multipoint-to-point network may be switched off or inactive, may be switched on or active without being operational, or may be operational. Upon receipt of the group identification message GIM, network terminals which are switched on and simultaneously desire to become operational are allowed to subscribe to the log-in trial. Terminals which become active later on or which do not desire to become operational within a certain timespan, are not allowed anymore to participate to the log-in trial that is start up earlier. Such terminals have to wait until a new log-in trial is set up and then ore allowed to subscribe thereto. The first message of a log-in trial may be identified by one single bit which is made 1 whereas this bit remains zero in all other messages of the log-in trial. Thus, a log-in trial always is associated with a number of terminals contending within a certain timespan when the log-in trial was started. Referring to Fig. 3, the signature of the log-in trial is written by the central station CS in a trial identification field Trial_ID of the group identification message GIM, and similarly, the signature of the group of network terminal identifiers is written in a group identification field Group_ID of the message GIM. In addition, the group identification message GIM includes a terminal identifier range field TI_Range the contents of which identifies a number of network terminals which are allowed to log-in. This range of terminal identifiers defines the contents of the group. Furthermore, the group identification message contains parameter values that the network terminal NT3 uses when it sends the upstream terminal identification message TIM_NT3. A first field with reference TX_Pow in Fig. 3 defines the power level used by the network terminal NT3 for transmission of TIM_NT3, and a second field with reference TX_Del defines the time delay D2 between the receipt of the log-in enable message LEM and the transmission of the terminal identification message TIM_NT3 by terminal NT3.

A certain time D1 after the group identification message GIM has been transmitted, the central station CS broadcasts a synchronous log-in enable message LEM, upon receipt of which subscribed network terminals may send a terminal identification message. As is seen from Fig. 4, the log-in enable message LEM contains a copy of the log-in trial signature in a trial identification field Trial_ID similar to that of the group identification message GIM. The first field with reference TE indicates that the message is a transmit enable message. The timing of the transmit enable message LEM indicates when the upstream terminal identification message TIM_NT3 has to be sent. Indeed, the terminal identification message TIM_NT3 is sent by network terminal NT3 a known time period, determined by the TX_Del field in the group identification message GIM, after receipt of the log-in enable message LEM. It has to be remarked that in an alternative implementation, the log-in enable message LEM may contain a time stamp in a time information field TIME, which is a reference relative to a clock that is broadcasted from the central station CS to all terminals NT1, NT2, NT3 and NT4. In this way, the terminal identification message TIM_NT3 can also be synchronised. In Fig. 4 such a time information field TIME is drawn although it is clear that its contents is not used since the group identification message GIM contains the TX_Del field.

It is to be remarked that although the above paragraph states that the log-in enable message LEM is sent a certain time D1 after transmission of the group identification message GIM, it is not excluded that the log-in enable message LEM is sent prior to the transmission of the group identification message GIM. As long as network terminal NT3 has time enough to check whether its identifier belongs to the selected group and to prepare the terminal identification message TIM_NT3, it is not important in which order both messages, GIM and LEM, arrive at network terminal NT3.

As is described in the previous paragraph, the timing of the terminal identification message TIM_NT3 is dictated by the group identification message GIM or log-in enable message LEM. The terminal identification message TIM_NT3 is drawn in Fig. 5 and contains a terminal identification field wherein terminal NT3 writes its own unique terminal identifier TI_b, a group identification field Group_ID and trial identification field Trial_ID which again contain the above mentioned signatures of the group and log-in trial respectively. It is noticed however that the presence of the latter signatures in the terminal identification message TIM_NT3 is not absolutely required since the timing of the terminal identification message TIM_NT3 and the contents of the earlier transmitted group identification message GIM already specify the group and log-in trial. The signatures however may be included as an additional check. In addition, the terminal identification field TIM_NT3 of Fig. 5 contains a trial counter field Trial_CT, which includes the number of unsuccessful log-in attempts of the network terminal NT3. A log-in attempt is called unsuccessful when at the end of it, the network terminal is not yet activated. When the terminal identification message TIM_NT3 is transmitted with insufficient power as a result of which the message is received at a power level below detection level by the central station CS, or when terminal identification messages from other network terminals corrupt the terminal identification message TIM_NT3 from terminal NT3, the log-in attempt will for instance be unsuccessful.

Upon receipt of the terminal identification message TIM_NT3, the central station sends back a report or confirmation message CM_NT3. In Fig. 6, the group identification field Group_ID and trial identification field Trial_ID again contain the signatures of the group of terminal identifiers and the log-in trial. If the log-in attempt is successful, the central station writes in a terminal identification field, the unique terminal identifier TI_b of the network terminal NT3 that has become operational. Probably, the central station assigns to the activated network terminal NT3 a new terminal identifier via a new terminal identification field TI_New. If on the other hand the log-in attempt is unsuccessful because several network terminals forming part of the group simultaneously transmitted terminal identification messages, the central station CS may decide not to send any confirmation message or, in an alternative embodiment, may send a confirmation message CM_NT3 that specifies what further actions to take. The group of terminal identifiers may be re-partitioned in new groups whose signatures and terminal identifier ranges may be communicated to the network terminal NT3 via the new group identification fields, NGr1_ID, and NGr2_ID, and the new group range fields, NGr1_Rng and NGr2_Rng. If, due to insufficient transmit power, the terminal identification message TIM_NT3 is received at a power level below detection level by the central station, the central station CS replies with a confirmation message CM_NT3 wherein the fields NGr1_ID, NGr1_Rng, NGr2_ID, NGr2_Rng, TI_New, and the terminal identification field are left empty. For the network terminal NT3, such an empty confirmation message CM_NT3 implies that its transmit power has to be increased. The new power level is not communicated via the confirmation message CM_NT3, but by the group identification message GIM of a later phase of the log-in trial. With the transmission of the confirmation message CM_NT3, the phase is ended.

In the following paragraphs, a complete log-in trial will be described for the situation wherein network terminal NT1 and network terminal NT4 are already operational. Two new network terminals, NT2 with unique identifier TI_b and NT3 with unique identifier TI_d try to become operational. The successive phases of the log-in trial are illustrated by the time diagram of Fig. 7.

In a first phase, the central station CS creates a partition of network terminal identifiers which contains only one group G. In other words, all network terminal identifiers TI_a ... TI_h known by the central station CS are included in one group with signature G. The signature G and the range of identifiers TI_a ... TI_h of this group are memorised by the central station in the group memory CGM. Since only one group G can be selected, the group pointer CGP points to group G in the group memory CGM. To start up the log-in trial, the group identification message generator GIM_G generates a group identification message GIM. The group identification field Group_ID and terminal identifier range field TI_Range of this message are filled with the signature G and range information TI_a, TI_h that is read from the group memory CGM. The trial identification field is filled with trial signature 1, the TX_Pow field is initialised to the minimum power level for transmission of terminal identification messages, and the TX_Del field is given the value D2. The group identification message generator GIM_G then applies the group identification message GIM to the transmitter CTX which broadcasts the message to the terminals NT1, NT2, NT3 and NT4. The terminals NT2 and NT3 which are active and want to become operational, subscribe to log-in trial 1.

In network terminal NT3, the group identification message GIM is received by the receiver TRX. Via receiver output TRXO2, the group identification message GIM is applied to the message monitor MM. Checking means CHK determines that terminal identifier TI_b belongs to the group G defined in the group identification field Group_ID since group G is listed in the group memory TGM. This group memory TGM contains a list of groups where the terminal identifier TI_b forms part of and is updated when groups are generated, re-partitioned or deleted. It can be supposed that group G is in the group memory of each terminal at any time. The terminal identification message generator TIM_G thereupon starts generating a terminal identification message TIM_NT3. Therein, the group and trial signature of the group identification message GIM are copied in the group identification field Group_ID and trial identification field Trial_ID respectively, the trial counter is initialised at 0, and the terminal identification field is filled with the unique identifier TI_b of the network terminal NT3. A terminal identification message similar to TIM_NT3 is generated in terminal NT2, which also wishes to become operational and which also has a unique identifier TI_d which forms part of group G.

Meanwhile, in the central station CS, the log-in enable message generator LEM_G has prepared a log-in enable message LEM, containing in its trial identification field Trial_ID the signature of log-in trial 1. Via the transmitter input CTXI1, this log-in enable message LEM is applied to the transmitter CTX which broadcasts the log-in enable message LEM a known time period D1 after it has transmitted the above described group-identification message GIM.

When the log-in enable message LEM is received by the receiver TRX in network terminal NT3, a control signal is generated at receiver output TRXO1. The logical and gate LM thereupon decides that the already prepared terminal identification message TIM_NT3 may be applied to the transmitter TTX, which is controlled so that it starts sending the terminal identification message TIM_NT3 a time period D2 after receipt of the log-in enable message by receiver TRX. Again similar thereto, network terminal NT2 transmits its terminal identification message a time period D2 after receipt of the log-in enable message LEM thereby.

On the common part of the upstream transmission link, the terminal identification messages of terminal NT2 and NT3 will contend. Consequently, the contention detector CD in the central station CS receives information but is not enable to interpret this information and as a result thereof, the contention detector CD decides that the group G has to be re-partitioned in two new groups, G1 and G2. Group G1 contains the terminal identifiers TI_a to TI_d whilst group G2 contains the remaining identifiers TI_e to TI_h. Thus, group G is re-partitioned in two groups G1 and G2 with equal length. The information with respect to groups G1 and G2 is stored in the group memory CGM via detector output DO1. Confirmation message generator CM_G generates a confirmation message CM_NT3 wherein the new group identification fields, NGr1_ID and NGr2_ID, and the new group range fields, NGr1_Rng and NGr2_Rng identify groups G1 and G2. This confirmation message is downstream broadcasted by the transmitter CTX. Obviously, the group identification field Group_ID and trial identification field Trial_ID of this confirmation message are filled with the signatures of group G and log-in trial 1, whilst the terminal identification field and new terminal identification field TI_New are left empty. The central station herewith ends the first phase of log-in trial 1.

Upon receipt of the confirmation message by the receiver TRX in network terminal NT3, the identifier of group G1 is stored in the group memory TGM since the message monitor MM recognises that the terminal identifier TI_b forms part of group G1. Similar actions are taken in network terminal NT2.

The central station CS starts up a second phase. Group pointer CGP now points to group G1 in the group memory CGM and group identification generator GIM_G generates a new group identification message GIM with as group identifier G1, as identifier range TI_a, TI_d, and as trial identifier that of log-in trial 1. The TX_Pow and TX_Del fields are left unmodified. Both network terminals NT2 and NT3 form part of the selected group G1. This is detected by the checking means CHK whereupon they both start preparing their terminal identification messages. In these terminal identification messages, the group identifier is updated, and the trial counter is increased from 0 to 1 since one previous log-in attempt was unsuccessful. Meanwhile, the central station CS and more particularly the log-in enable message generator LEM_G therein has prepared a log-in enable message LEM which is broadcasted by transmitter CTX a time period D1 after the group identification message GIM has been broadcasted. Upon receipt thereof, network terminals NT2 and NT3 transmit their terminal identification messages which again contend on the common part of the upstream transmission link. In the central station CS, once more the decision is made to re-partition the terminal identifiers. This time, group G1 is split in two new groups G11 and G12, and via a confirmation message, similar to the above described one, the network terminals are informed about the creation of the two new groups G11 and G12. The group memories CGM in the central station CS and TGM in the network terminals are updated. The group memory TGM of terminal NT3 now also contains group G11 whilst the group memory of terminal NT2 contains G12.

In a third phase, central station CS generates a group identification message GIM and log-in enable message LEM and broadcasts these messages with a time interval D1 in between. The trial identification fields Trial_ID of these messages still contain trial signature 1, and the group identified in the group identification field Group_ID is G11. Upon receipt of the group identification message GIM, network terminal NT3 once more generates a terminal identification message TIM_NT3 which contains the right group and trial signatures and whose trial counter Trial_CT has become 2 instead of 1. This terminal identification message TIM_NT3 is upstream transmitted once the log-in enable message LEM of phase 3 is received and, for the first time, will not be corrupted by another terminal identification message since terminal NT2 with identifier TI_d does not form part of group G11. The terminal identification message TIM_NT3 in the central station CS is applied to the contention detector CD which is able now to interpret the received information. Via detector output D02, the confirmation message generator CM_G is controlled so that it constitutes a confirmation message CM_NT3 which indicates that network terminal NT3 is operational. In this confirmation message CM_NT3, the new group identification fields, NGr1_ID and NGr2_ID, and the new group range fields, NGr1_Rng and NGr2_Rng, are left empty, the terminal identification field contains a copy of the unique identifier TI_b received in the terminal identification message TIM_NT3, and a new identifier, unique within the network but smaller in length than TI_b is written in the new terminal identification field TI_New. Obviously, the group and trial identification fields, Group_ID and Trial_ID, contain the signatures of group G11 and log-in trial 1. The confirmation message CM_NT3 is downstream transmitted as a result of which phase 3 is ended.

In the network terminal NT3, the confirmation message CM_NT3 enters the message monitor MM which orders the terminal identifier memory TI_M via a not drawn control connection to store the new terminal identification.

In phase 4, the central station allows network terminals which belong to group G11 and already tried to log-in without success, to log-in by transmitting terminal identification messages at an increased power level. Thus, the generated group identification message GIM for phase 4 is equal to that of phase 3 except for the power parameter in the TX_Pow field whose value is increased. Since network terminal NT3 with unique identifier TI_b is already operational and no network terminal with unique identifier TI_a wants to become operational, the central station will receive no response after transmission of the log-in enable message LEM according to phase 4. As a consequence, phase 4 ends by broadcasting an empty confirmation message from the central station CS towards the network terminals.

If it is assumed that the transmission power of the network terminals can be increased only once before a maximum power threshold is reached, phase 5 will deal with group G12. Otherwise, phase 4 has to be repeated with increasing steps of the power parameter in the TX_Pow field of the group identification message GIM until the maximum power threshold is reached.

In phase 5 of the procedure illustrated by Fig. 7, the group pointer CGP points to group G12. The steps performed in phase 3 by the central station CS and network terminal NT3 are executed in phase 5 by the central station and network terminal NT2 whose unique identifier TI_d belongs to group G12. At the end of phase 5, network terminal NT2 is operational and its terminal identification memory contains a new terminal identifier, unique within the network.

Other terminals, different from terminal NT2, which have identifiers that belong to group G12, are given the chance to log-in at a higher power level in phase 6, but for similar reasons as in phase 4, no network terminal will respond. At the end of phase 6, all network terminals of group G1 have had the probability to log-in.

Identically to phase 2, wherein network terminals of group G1 were admitted to log-in, phase 7 admits network terminals of group G2 to attempt to log-in. Such network terminals have unique identifiers in the range of TI_e to TI_h and in the supposed situation, none of them wants to log-in.

In phase 8, the same group G2 is allowed to log-in by upstream transmitting terminal identification messages at a higher power level, but also in this phase, no terminal will respond.

Summarising, the complete log-in procedure for the particular situation illustrated by Fig. 7 counts 8 phases in each of which time is provided for 4 messages to be transmitted. From this moment on, the signature of the log-in trial gets free again and can be used as a signature for later log-in trials. In this way, the required length for the signature of the log-in trials is kept low.

To give an idea of the effectiveness of the present invention, the time diagram of Fig. 7 has to be compared to the time diagram of Fig. 8 which shows the successive phases that are passed through by a straight polled log-in method if the same situation is considered wherein two network terminals NT2 and NT3 with respective unique identifiers TI_d and TI_b attempt to log-in. A phase in Fig. 7 and Fig. 8 is marked with PI if, in this phase, the central station receives terminal identification message at a level below detection level or receives no terminal identification message and therefore allows the terminals to increase their transmit power in the next phase. A phase wherein the central station receives no terminal identification message but wherein the terminals are not allowed to further increase their power since the maximum power threshold is reached, is marked by ST. If the central station receives more than one terminal identification message simultaneously, which is only possible in the procedure illustrated by Fig. 7, the phase is marked by SG. At the end of such phases, a group of terminal identifiers will be re-partitioned. Those phases wherein the central station receives one single terminal identification message at a power level that is high enough, carry the reference LI. Only these phases correspond to successful log-in attempts. As follows from Fig. 8, the straight polled log-in method, wherein for each terminal identifier, TI_a to TI_h, known by the central station CS, the corresponding terminal is given the admittance to log-in, and additionally to increase its transmit power, requires already 14 phases for the simple situation considered above. Thus, even when the phases in Fig. 8 only have to provide time for three messages instead of 4 in the phases of Fig. 7 (since no groups have to be identified via a group identification message), it is clear that the straight polled log-in method is much more time consuming than the method according to the present invention.

It is remarked here that although the re-partition of groups in the above described implementation of the present method is a symmetrical re-partition wherein both new groups contain the same amount of network terminal identifiers, the present invention is not restricted thereto. By re-partitioning the groups, a tree-like structure of groups is generated. Hence, a person skilled in the art will recognise that the depth and width of the tree can be influenced by different scenario's: it may be possible to make an asymmetric split of groups which reduces the depth of the tree but makes it wider, it may be possible to split up in more than two groups, it may be possible to split up in one group and send the rest of a group to a temporary waiting group common for all levels of splitting, and so on.

Another remark is that the application of the technique of partitioning terminal identifiers in groups to allow network terminals to become operational without being disturbed by other terminals, is not restricted to protocols wherein messages are constituted as described in the above implementation. Transmission of a group identification message may for instance be unnecessary in a system wherein both the central station and network terminals are both able to re-partition the groups and select a new group according to predetermined rules. In such a system, it would be sufficient for the central station to inform the network terminals that contention of terminal identification messages has occurred. The terminals thereupon would be capable of re-partitioning the groups and modifying their group memories autonomously.

Furthermore, some fields in the messages such as the group and trial identification fields in the terminal identification messages may contain redundant information and therefore may be skipped. Other fields, such as the TX_Del and TX_Pow fields in the group identification messages may be replaced by fields in one of the other messages, such as the TIME field in the log-in enable message. Still other fields, such as the TI_New field, are application dependent and may or may not be included without departing from the scope of the present invention.

Another remark is that the trial identification field, which is used in the above described embodiment to determine network terminals which desire to become operational within a certain timespan, in alternative implementations of the invention may be used to identify what is called a phase here above. In such implementations, each new sequence of 4 messages, i.e. a group identification message, a transmit enable message, a terminal identification message and a confirmation message, would be identified by a new trial identifier. In this way, it is immediately seen from the messages themselves to which phase they belong, which is an advantageous feature especially when messages of different phases are traveling at the same time through the network.

In the above described embodiment, the groups of terminal identifiers are processed one after the other. It will be clear to a person skilled in the art that several groups may be processed in parallel in alternative embodiments wherein the processing capacity in the central station and network terminals allows such parallel processing.

In addition, it is noticed that the order wherein groups are processed may be determined by priority rules or may be based on a fairness algorithm wherein the order for instance is selected randomly. Another way of obtaining fairness is to make group borders flexible. In an implementation with flexible group borders, group G1 would comprise terminal identifiers TI_a to TI_d in a first log-in trial, would comprise terminal identifiers TI_b to TI_e in a second log-in trial, and so on. Thus, all terminals will get the same probability of being treated first, whereas in the above described embodiment, terminals with low terminal identifiers inherently have a certain priority.

In an advantageous implementation of the present invention, a simple final control in the central station allows to detect fraudulent network terminals and refuses such network terminals to log-in. Indeed, when having received the terminal identification message from a network terminal, the central station may check whether the network terminal really forms part of the group that is admitted to log-in. If not, the central station may decide not to grant access to the terminal by refusing to send a confirmation message with a new terminal identifier thereto. In this way, network terminals which fraudulently pretend to belong to a group, are detected and are refused to log-in.

Another remark is that the method according to the present invention still may be combined with the above cited known log-in method which, as will be recognised by a person skilled in the art, remains faster than the present invention when network terminals attempt to log-in rather sporadically, but which gets into trouble whenever two or more terminals attempt to log-in simultaneously. In such situations, the present method provides an optimal solution.

Furthermore it is noticed that the applicability of the present invention does not depend on the transmission medium of the network. Hence, in the above description, terms as transmission line, connection, link, ..., should not be interpreted as physical existing links such as cable lines or optical fibres, but also comprise radio links, satellite connections, and so on.

While the principles of the invention have been described above in connection with specific apparatus, it is to be clearly understood that this description is made only by way of example and not as a limitation on the scope of the invention.

## Claims

1. Method for controlling log-in admittance of a network terminal (NT3) in a log-in trial set-up in a multipoint-to-point network wherein a plurality of network terminals (NT1, NT2, NT3, NT4) each having a respective unique terminal identifier (TI_h, TI_d, TI_b, TI_g) are coupled to a central station (CS), said method comprising the step of:
transmitting a log-in enable message (LEM) from said central station (CS) to said network terminals (NT1, NT2, NT3, NT4),
characterised in that, prior to transmission of said log-in enable message (LEM), said method comprises the step of:
creating a partition of network terminal identifiers (TI_a, ..., TI_h) in groups (G1, G2), said partition being known by said central station (CS) and each one of said network terminals (NT1, NT2, NT3, NT4) knowing at least said groups where said respective unique terminal identifier thereof belongs to,
and further in that said network terminal (NT3), upon receipt of said log-in enable message (LEM), is admitted to log-in only when said network terminal identifier (TI_b) thereof belongs to a selected one (G1) of said groups (G1, G2), said selected one (G1) being known by said central station (CS) and said network terminals (NT1, NT2, NT3, NT4).

2. Method according to claim 1, characterised in that in successive phases of said log-in trial, through said groups (G1, G2) is polled.

3. Method according to claim 1, characterised in that said log-in enable message (LEM) includes a trial identification field (Trial_ID) containing an identifier of said log-in trial.

4. Method according to claim 1, characterised in that said central station (CS) chooses said selected one (G1) of said groups (G1, G2) and thereupon transmits a group identification message (GIM) to said network terminals (NT1, NT2, NT3, NT4), said group identification message (GIM) including a group identification field (Group_ID) containing an identifier of said selected one (G1) of said groups (G1, G2).

5. Method according to claim 4, characterised in that said group identification message (GIM) further includes a terminal range field (TI_Range) containing an identification of a range of network terminal identifiers (TI_a, ..., TI_d) which constitutes said selected one (G1) of said groups (G1, G2).

6. Method according to claim 4, characterised in that said group identification message (GIM) further includes a trial identification field (Trial_ID) containing an identifier of said log-in trial.

7. Method according to claim 1, characterised in that said network terminal (NT3) transmits, when it is admitted to log-in, a terminal identification message (TIM_NT3) towards said central station (CS), said terminal identification message (TIM_NT3) including a terminal identification field containing said respective unique terminal identifier (TI_b) of said network terminal (NT3).

8. Method according to claim 4 and claim 7, characterised in that said group identification message (GIM) further includes a terminal transmit parameter section including a transmit power field (TX_Pow) containing information which allows said network terminal (NT3) to adapt its transmit power for transmission of said terminal identification message (TIM_NT3), and/or a transmit delay field (TX_Del) containing time information for transmission of said terminal identification message (TIM_NT3).

9. Method according to claim 7, characterised in that said log-in enable message (LEM) carries time information (Time) for transmission of said terminal identification message (TIM_NT3).

10. Method according to claim 7, characterised in that all network terminals (NT2, NT3) whose respective unique terminal identifiers (TI_d, TI_b) form part of said selected one (G1) of said groups (G1, G2) and who attempt to log-in, stepwise increase their transmit power when said terminal identification message (TIM_NT3) is received by said central station (CS) at a power level below detection level., until a maximum transmit power level is reached.

11. Method according to claim 7, characterised in that said network terminal (NT3) adapts its transmit delay (D2) when said terminal identification message (TIM_NT3) is not interpreted correctly by said central station (CS) due to wrong timing.

12. Method according to claim 7, characterised in that said selected one (G1) of said groups (G1, G2) is re-partitioned in new groups (G11, G12) when a plurality of terminal identification messages, similar to said terminal identification message (TIM_NT3) but transmitted by different ones of said network terminals (NT2, NT3) having a said respective unique terminal identifier (TI_d, TI_b) that forms part of said selected one (G1) of said groups (G1, G2), are contending.

13. Method according to claim 7, characterised in that said terminal identification message (TIM_NT3), upon receipt thereof by said central station, (CS), is monitored and in that said central station (CS) generates a confirmation message (CM_NT3) if said network terminal (NT3) is logged-in successfully.

14. Method according to claim 7, characterised in that said central station (CS), upon receipt of said terminal identification message (TIM_NT3), checks whether said respective unique terminal identifier (TI_b) in said terminal identification field forms part of said selected one (G1) of said groups (G1, G2), and transmits no confirmation message if the result of this check is negative.

15. Method according to claim 12, characterised in that said central station (CS) generates a confirmation message (CM_NT3) which includes a plurality of new group identification fields (NGr1_ID), NGr2_ID) and corresponding new group range fields (NGr1_Rng, NGr2_Rng) containing respectively identifiers of said new groups (G11, G12) and identifications of network terminal identifier ranges (TI_a, ..., TI_b and TI_c, ..., TI_d) of said new groups (G11, G12).

16. Method according to claim 13 or claim 15, characterised in that said confirmation message (CM_NT3) includes a group identification field (Group_ID) containing an identifier of said selected one (G1) of said groups (G1, G2).

17. Method according to claim 13 or claim 15, characterised in that said confirmation message (CM_NT3) includes a trial identification field (Trial_ID) containing an identifier of said log-in trial.

18. Method according to claim 13, characterised in that said confirmation message (CM_NT3) includes a terminal identification section comprising a terminal identification field containing said respective unique terminal identifier (TI_b), and/or a new terminal identification field (TI_New) containing a newly assigned identifier for said network terminal (NT3).

19. Log-in arrangement to be used in a central station (CS) of a multipoint-to point network wherein said central station (CS) is coupled to a plurality of network terminals (NT1, NT2, NT3, NT4) each having a respective unique terminal identifier (TI_h, TI_d, TI_b, TI_g), said log-in arrangement including:
a) first message generating means (LEM_G) adapted to generate a log-in enable message (LEM); and
b) transmitting means (CTX) to a first input of which (CTXI1) said first message generating means (LEM_G) is coupled, said transmitting means (CTX) being adapted to broadcast said log-in enable message (LEM) to said network terminals (NT1, NT2, NT3, NT4),
characterised in that said log-in arrangement further is equipped with:
c) group memory means (CGM) adapted to store information with respect to a partition of network terminal identifiers (TI_a, ..., TI_h) in groups; and
d) group pointing means (CGP) adapted to memorise a selected one (G1) of said groups (G1, G2) representing a set of network terminals which are admitted to log-in upon receipt of said log-in enable message (LEM).

20. Log-in arrangement according to claim 19, characterised in that it further includes:
e) receiving means (CRX) adapted to receive terminal identification messages (TIM_NT3) and to apply said terminal identification messages (TIM_NT3) to a receiver output (RXO);
f) contention detection means (CD) an input of which being coupled to said receiver output (RXO), said contention detection means (CD) being adapted to determine if more than one of said terminal identification messages are contending, and to generate a first confirmation control signal at a first detector output (DO1) if so, and to generate a second confirmation control signal at a second detector output (DO2) if one terminal identification message is received; and
g) second message generating means (CM_G), a control input (CI1) thereof being coupled to said second detector output (DO2) and an output thereof being coupled to a second transmitter input (CTXI2) of said transmitting means (CTX), said second message generating means (CM_G) being adapted to generate, on activation of said second confirmation control signal a confirmation message (CM_NT3) confirming the receipt of said terminal identification message (TIM_NT3).

21. Log-in arrangement according to claim 20 characterised in that said first detector output (DO1) is coupled to said group memory means (CGM) and to said group pointing means (CGP), said group memory means (CGM) being adapted to store, on activation of said first confirmation control signal, information with respect to a re-partition of said selected one (G1) of said groups (G1, G2) in new groups (G11, G12), and said group pointing means (CGP) being adapted to memorise, on activation of said first confirmation control signal, one (G11) of said new groups (G11, G12).

22. Log-in arrangement according to claim 19, characterised in that said arrangement further includes:
h) third message generating means (GIM_G), coupled between said group memory means (CGM) and a third input (CTXI3) of said transmitting means (CTX) and adapted to generate a group identification message (GIM) indicating said selected one (G1) of said groups (G1, G2) to said network terminals (NT1, NT2, NT3, NT4).

23. Log-in arrangement according to claim 22, characterised in that said contention detection means (CD) is adapted to generate a power control signal at a third detector output (DO3) thereof if a terminal identification message is received at a power level below detection level, said third detector output (DO3) being coupled to a control input (CI2) of said third message generating means (GIM_G), said third message generating means (GIM_G) being adapted to generate, upon activation by said power control signal a group identification message (GIM) indicating to said network terminals (NT2, NT3) of said selected group (G1) which attempt to log in that their transmit power is allowed to increase.

24. Log-in arrangement according to claim 22, characterised in that said contention detection means (CD) is adapted to generate a timing control signal at a third output (DO3) thereof if a terminal identification message is received with wrong timing, said third detector output (DO3) being coupled to a control input (CI2) of said third message generating means (GIM_G), said third message generating means (GIM_G) being adapted to generate, upon activation by said timing control signal, a group identification message (GIM) indicating to said network terminals (NT2, NT3) of said selected group (G1) which attempt to log-in that their timing has to be modified.

25. Log-in arrangement according to claim 20, characterised in that said contention detection means (CD) is implemented by a state machine.

26. Log-in arrangement to be used in a network terminal (NT3) out of a plurality of network terminals (NT1, NT2, NT3, NT4) coupled in a multipoint-to-point network to a central station (CS) said network terminals (NT1, NT2, NT3, NT4) each having a respective unique terminal identifier (TI_h, TI_d, TI_b, Ti_g), said log-in arrangement including:
a) identifier memory means (TI_M) adapted to store said respective unique terminal identifier (TI_b) of said network terminal (NT3);
b) receiving means (TRX) adapted to receive a log-in enable message (LEM) from said central station (CS) and to thereupon generate a first log-in allowed control signal at a first receiver output (TRXO1),
characterised in that said log-in arrangement further includes:
c) checking means (CHK) adapted to check whether said respective unique terminal identifier (TI_b) forms part of a selected one (G1) of groups (G1, G2) of a partition of network terminal identifiers (TI_a ... TI_h), and to generate a second log-in allowed control signal at an output thereof if so; and
d) logical means (LM) to respective inputs of which said first receiver output (TRXO1) and said output of said checking means (CHK) are coupled, said logical means being adapted to activate a log-in trial on presence of both said first and second log-in allowed control signal.

27. Log-in arrangement according to claim 26, characterised in that it further includes:
e) transmitting means (TTX) adapted to transmit a terminal identification message (TIM_NT3) to said central station (CS); and
f) message generating means (TIM_G) having a control input coupled to an output of said logical means (LM) and an output coupled to an input of said transmitting means (TTX), said message generating means (TIM_G) being adapted to generate, on activation by said logical means (LM), said terminal identification message (TIM_NT3).

28. Log-in arrangement according to claim 26, characterised in that:
g) said arrangement further includes group memory means (TGM) adapted to store information with respect to said groups (G1, G2);
h) said receiving means (TRX) further is adapted to receive a confirmation message (CM_NT3) or group identification message (GIM) from said central station (CS) and to apply said confirmation message (CM_NT3) or group identification message (GIM) to a second receiver output (TRXO2); and
l) said arrangement further includes monitoring means (MM), an input thereof being coupled to said second receiver output (TRXO2), said monitoring means (MM) being adapted to monitor said confirmation message (CM_NT3) or group identification message (GIM), and to thereupon apply group identifiers of new groups where said unique network terminal identifier (TI_b) belongs to, to said group memory means (TGM).

29. Log-in arrangement according to claim 28, characterised in that said monitoring means (MM) further is adapted to generate a power control signal and/or a timing control signal at a second monitor output (MO2) if a terminal identification message is received at a power level below detection level and/or if a terminal identification message is received with wrong timing.

30. Log-in arrangement according to claim 27 and claim 28, characterised in that:
j) said second monitor output (MO2) is coupled to a power and timing control input of said transmitting means (TTX), said transmitting means (TTX) being adapted to increase, under control of said power control signal, its transmit power for said terminal identification message (TIM_NT3) stepwise and to modify, under control of said timing control signal, its timing for transmission of said terminal identification message (TIM_NT3).

31. Log-in arrangement according to claim 28, characterised in that said checking means (CHK) and said monitoring means (MM) are implemented in a state machine.
